# EUROPEAN PATENT APPLICATION

(11) **EP 1 503 581 A2**
(43) Date of publication of application: **02.02.2005**
(21) Application number: 04254107.8
(22) Date of filing: 08.07.2004
(51) Int. Cl.: H04N 5/335

(54) **Digital camera image**

(30) Priority: 29.07.2003 US 632204
(71) Applicant: Xerox Corporation, Rochester, New York 14644 (US)
(72) Inventor: Luciano, David J., Webster, New York 14580 (US)
(74) Representative: Rackham, Stephen Neil

(57) **Abstract**

A method of using a digital camera, comprises a first image of at least one subject, generating a guide image from the first image, and using the guide image to record a second image. The guide image is superimposed over a pre-view of the second image in preparation for recording the second image so that the second image will be recorded with at least one of substantially the same composition and substantially the same perspective as the first image. A camera specifically adapted to perform the method is also disclosed.

## Description

Most digital cameras today are similar in size to and behave like conventional point-and-shoot cameras. Unlike conventional cameras, however, most digital cameras store digital images in an internal flash memory or on external memory cards, and some are equipped with a liquid-crystal display (LCD) screen on the back of the camera. Most digital cameras operate in two modes, record and play, although some only have a record mode. In record mode, the LCD is used as a viewfinder in which the user may view an object or scene before taking a picture. In play mode, the LCD is used as a playback screen for allowing the user to review previously captured images either individually or in arrays of, for example, four, nine, or sixteen images.

The use of digital cameras has increased greatly over the past few years. With advances in computer-based and related technologies including advent of the Internet, it is expected to increase even more in the years to come. Currently, digital cameras and the related technologies not only allow image capture, storage, downloading and manipulation, but also allow such processed images to be transmitted electronically, and in some instances wirelessly, anywhere in the world.

The digital camera industry, like other technology industries, strives to improve product functionality. Certain efficiencies of digital cameras are clearly superior to film-based alternatives. For example, in addition to not requiring changing film, many digital cameras do not require changing lens and/or filters to obtain photographs of a quality generally acceptable to the public. Moreover, digital photograph enables the user to reduce the amount of time necessary to achieve the finished product. For example, digital camera eliminate the need to bracket the process steps between shooting and developing, since the result is immediately evident. Also eliminated is the need to shoot two batches of film to protect against processing variations. Most importantly, however, a photographer is protected against having to re-stage the shot because of an exposure or processing failure.

In the amateur photography marketplace, digital cameras add new dimensions to the enjoyment that individuals experience through photography. For example, the advent of digital photography permits bringing artistry and creativity to picture taking, through the use of simple and easy-to-use conventional software, which may accompany a purchased camera, for installation of such digital-processed photographs onto an external output device such as a personal computer. Amateur photographers enjoy the immediate gratification of seeing and quickly sharing pictures, sometimes just seconds after such pictures have been taken.

In the current professional photography market, a popular use for digital cameras is web publication. Microscopists, too, who normally input images into computers using video cameras with so-called frame grabbers, find that digital cameras offer improvements in quality, with an associated reduction in cost and including the convenience of not having to install a frame grabber in their computers. The digital camera is also used, e.g., in the construction industry to record the progress of renovation project over time. In particular, one is able to visually view how a building looked beforehand by taking a picture at the start of a project and comparing it to how the building looks after renovation. Since the fundamentals of photography include image composition and perspective, it is desirable to be able to easily retake such comparative photographs throughout the renovation phase, while maintaining the desired image composition and perspective of the original case.

Embodiments are directed toward a need in the art for a new digital camera that provides users the ability to view a guide, which is characterized as a template of an object previously photographed, and which may be viewed by way of a conventional component of the camera, such as the camera's LCD. Such a guide would allow a second or subsequent time-lapsed picture to be taken, and thereafter framed, in the same composition and perspective as the object or subject as originally photographed in the first picture.

Embodiments are directed to a method for using a digital camera, wherein the method includes recording a first image of at least one subject, generating a guide image from the first image, and using the guide image to record a second image of a second subject. The guide image is superimposed over a subject of the second image in preparation for recording the second image so that the second image will be recorded with at least one of substantially the same composition and substantially the same perspective as the first image.

Various exemplary embodiments of embodiments will be described in detail, with reference to the following figures, wherein:
Figure 1 is a block diagram or schematic of an exemplary digital camera embodying principles of the present invention.
Figure 2 illustrates an example of using a digital camera, such as that illustrated in Figure 1, where the camera is used to take an original picture of an outdoor parking lot scene.
Figure 3 is a guide image presenting a trace contour of a plurality of edges generated by a digital camera embodying, such as that illustrated in Figure 1, in reference to the original picture of the outdoor parking lot scene of Figure 2.
Figure 4 is a composite presenting the guide image of Figure 3 superimposed over the original scheme of Figure 2.

Inasmuch as the art of digital photography is well known, the present invention will initially be described in reference to various processing stations in a typical digital camera. The following description is schematic in nature and meant to be exemplary. It is recognized that the detailed inner workings of digital cameras may vary from what is presented here.

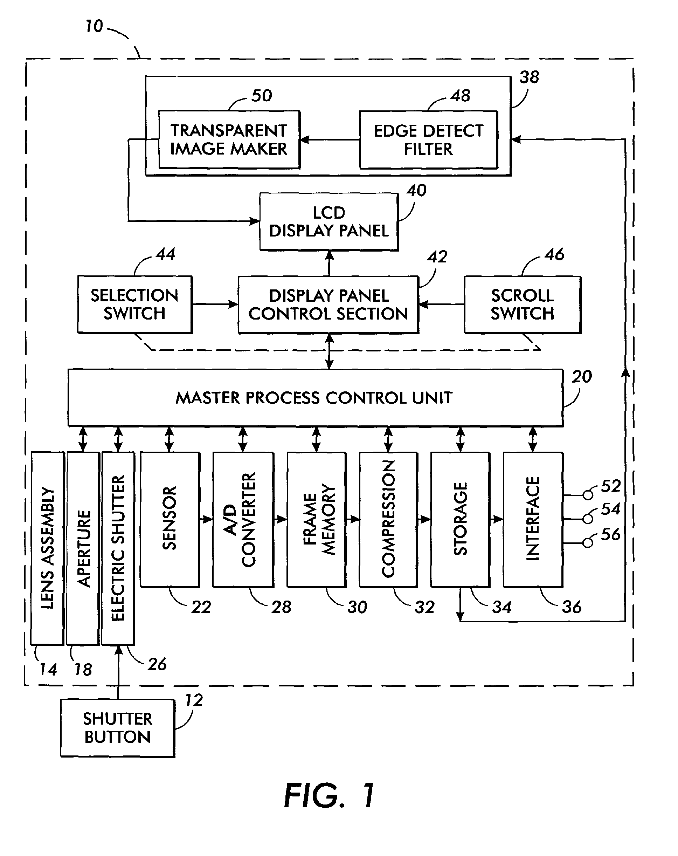

Figure 1 is a block diagram of an example of a digital camera 10 embodying principles of the present invention. The digital camera 10 is similar to a traditional film camera except that film is replaced with an electronic sensor 22. An exemplary image sensor employable in digital camera 10 is a Charge Coupled Device (CCD). However, other types of sensors, such as those using Complementary Metal Oxide Semiconductor (CMOS) technology are employable too. The digital camera 10 captures an image of an object via reflected light passing through the lens assembly 14 and impacting the sensor 22. The sensor 22 comprises an array of photosites that change photons striking them into electrons. The sensor 22 responsively generates a set of raw image data representing a captured image. The raw image data, in the form of electrical voltages, is then routed through an A/D converter 28 where the voltages are changed to data pixels. The mosaic composed of these pixels is then stored on Frame Memory 30. The Frame Memory 30 puts all the pixels together in the form of a digital image. A "thumbnail" image is created, which is viewable on a display panel 40 (generally composed of a Liquid Crystal Display (LCD)) via Display panel Control Section 42 and switches 44 and 46 respectively. If the user does not care for the picture, it can be deleted.

Typically, a Master Central Processing Unit (MCPU) 20 monitors and controls the tasks taking place inside the camera 10. During power up, the MCPU 20 may also check that preselected camera components are operating properly and ready to function as intended. If a preselected component were not working, the MCPU may cause the LCD 40 to display a message informing a user of this information. Further, the MCPU 20 may prevent the camera from working until the failure is addressed. If everything is deemed to function as intended, camera 10 is ready to capture images.

The screen of the LCD panel 40 is like a computer monitor, in the sense that LCD panel 40 is capable of displaying images stored in the digital camera 10. Typically, the digital camera 10 will have a Playback mode so that a user may review pictures stored in memory. In a Record mode, i.e., when preparing for and actually taking a picture, the LCD panel 40 also displays menus containing options for taking pictures and storing such pictures in memory. These operating modes enable a user to change camera settings and review images through the display panel control section 42 communicating with the selection switch 44 and the scroll switch 46. In some cameras, the selection switch 44 and the scroll switch 46 may be part of a single external "Menu Dial" (not shown) incorporating the functionality of both switches. For example, the "Menu Dial" may be a rotary switch with a push-to-select option that operates the camera menus. A user could depress the "Menu Dial" to display the menus and make selections. Likewise, turning the "Menu Dial" would allow the user to scroll between different choices and camera settings.

To record a current image, the user turns the camera on and selects a record mode for the camera. In embodiments, a "record menu" of options for taking new photographs would be displayed on the LCD screen 40. The record menu will typically be composed of a string of icons, with each icon representing a different item. The user would select an item to be changed, such as, for example, pixel resolution, flash, and focusing distance. Once the item is selected, the LCD 40 will typically present the user with a submenu of possible options for the selected item. For example, the user may decide to select a "NO RED-EYE" option under the flash setting. The user would first select the flash setting causing a new submenu to appear. Then the user would select the NO RED-EYE option from the submenu under flash.

It is important to control the amount of light reaching the sensor 22. If too much light reaches the sensor 22, information about light intensity can be lost. A filter (not shown) or electronically controlled aperture can be used between the lens array 14 and the sensor 22 to block light from reaching the sensor. Alternatively, the digital camera 10 may include a more traditional shutter and aperture system, whereby the aperture size is used to control the amount of light reaching the sensor and the shutter 26 controls the amount of time wherein the sensor is exposed to light. In a point and click type camera, the user would depress an external shutter button 12 half way down, for example, thereby allowing the MCPU 24 to take a light measurement to determine how long the electric shutter 26 should remain open. As can be seen in Figure 1, the shutter button 12 is connected to the shutter 26, which is also connected to the MCPU 24. The shutter button 12 may also connect to the MCPU 24 instead of or in addition to the shutter 26. Fully depressing the shutter button 12 would activate the shutter 26 to open for the length of time specified by the MCPU 24. The photosite sensor 22 would then capture the light reflected from and object or subject, focused on it through lens assembly 14, and store the light as electrical voltages representing information about the picture.

Those skilled in the art will recognize that digital camera 10 may also allow for adjustment of the aperture and shutter settings via menu options on LCD 40. This allows the user manual control over selecting the aperture and shutter speed instead of the automatic point-and-shoot type of operation already discussed.

The user can also select a playback mode to activate a "play menu" that manages images already stored in the camera. For example, when the user selects the play menu he or she can view pictures stored in the camera's memory, delete selected pictures, or lock selected pictures to prevent accidental deletion. Thus, having the ability to review and delete images on camera 10 helps the user avoid the time and annoyance of saving unwanted images previously photographed. If an image does not come out the way the user wanted he or she deletes it and tries again.

If it is decided to save the photo, it leaves Frame Memory 30 to be stored in a small, Electrically Erasable Programmable Read Only Memory (EEPROM) device 34 (e.g., a flash memory card), which is used for long-term storage. The storage device 34 is typically removable. Before proceeding to the storage device 34, the image may be compressed at compression section 32. In embodiments, the user can determine the amount of compression to be applied before taking a picture. Two exemplary compression options include low resolution for aggressive compression and high resolution for minimum compression.

When an image reaches the EEPROM 34, the MCPU 20 reduces a "pictures remaining" field (not shown) by one. This information is conveyed to the user, through the LCD 40 or elsewhere in the display panel control section 42 to remind the user of the number of pictures left that the user may take. Digital cameras typically have the capacity to store some finite number of images in memory 34. As the storage of the camera 10 reaches its limit, either these images can be downloaded to an external storage medium or the storage area of the digital camera may be replaced. For example, the pictures stored on EEPROM 34 can be subsequently transferred to a personal computer, hand-held television, or other device suitable for viewing, editing, sharing and/or archiving by way of an interface 36 and interface appropriate connectors 52, 54, and/or 56.

On most digital cameras, in addition to displaying pictures already taken and communicating with the user through appropriate menus, the display panel serves as a viewfinder when taking pictures. In fact, most digital cameras force the user to use the LCD when shooting close-up pictures to avoid parallax errors.

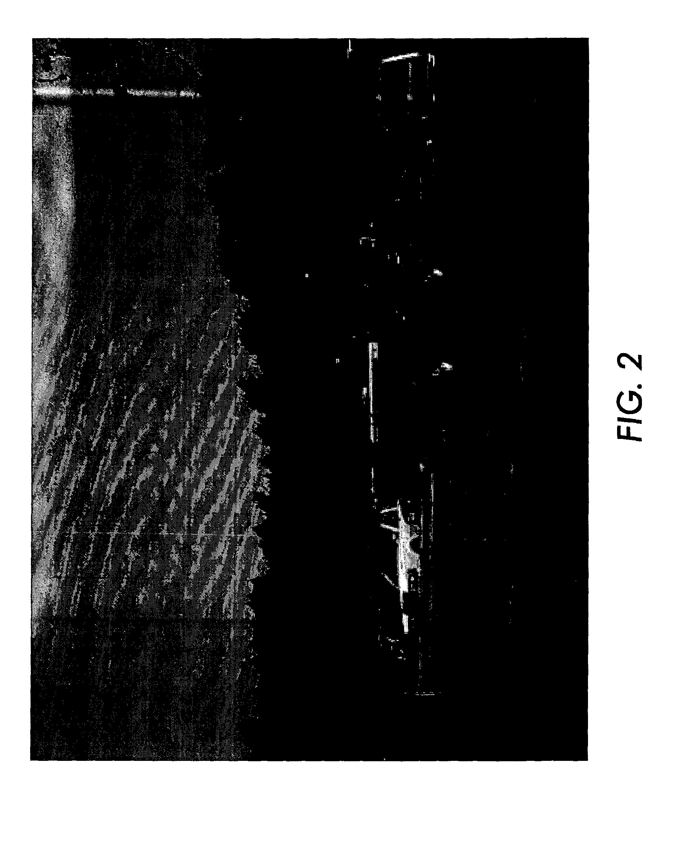

Because sensor 22 is operably coupled to EEPROM 34 via A/D converter 28, frame memory 30 and compression section 32, EEPROM 34 is adapted to receive a record of the first image, The picture represented by Figure 2 is stored in EEPROM 34. Using the playback mode of the digital camera 10, the user can view this image again. In embodiments, the user can also select a framing mode.

The user would select a framing mode where the user wanted to preserve the composition or the perspective of the original picture in a picture taken later. Figure 2 illustrates a picture of an outdoor parking lot scene taken with a digital camera such as the camera 10 schematically illustrated in Figure 1. The user may desire to photograph the parking lot again after an elapsed period. The user may also want the same composition and perspective as shown in Figure 2. However, achieving the correct perspective and distance may be difficult. To assist the user, an image editor 38, such as that schematically illustrated in Figure 1 can be used to accomplish the task.

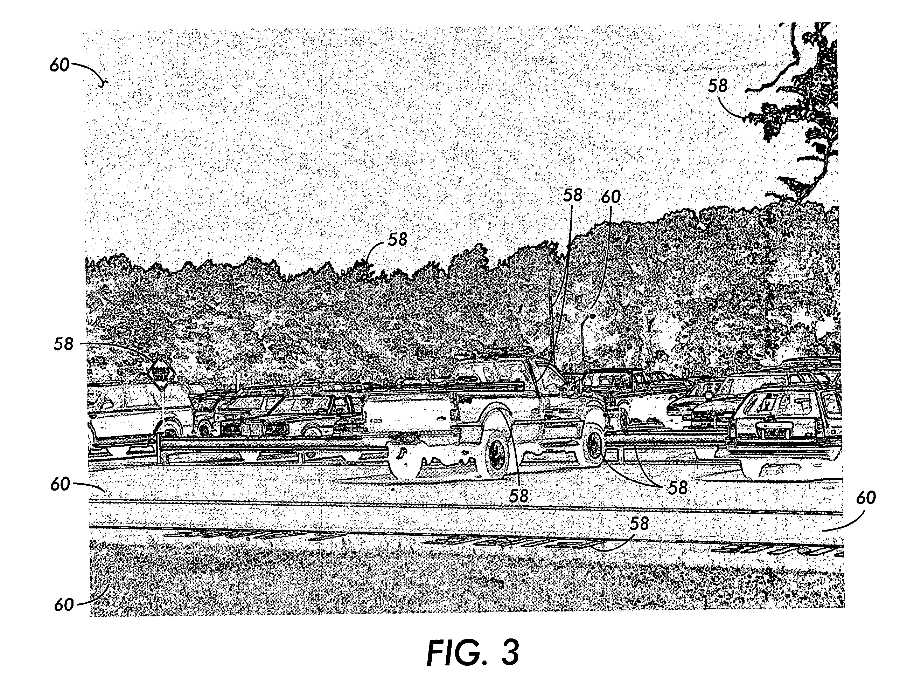

If the user selects a framing mode, the image data associated with the picture 10 is transferred to an image editor 38. The image editor 38 creates at least one outline for framing a second image on the LCD screen 40. The image editor 38 and the edge detect filter 48 apply a two dimensional effect to the image called "edge detection". Edge detection is well-known in the art of image processing. The edge detect filter 48 finds the edges of the objects or subjects in Figure 2 and converts them to a plurality of lines 58 on a background of a single color 60. Once the edge detect filter 38 completes finding the element edges in Figure 2, a guide image maker 50 located in the image editor 38 generates a guide image 62 composed of the edges 58. The new image 62, as shown in Figure 3, illustrates a trace contour of a plurality of edges in the Figure 2 scene generated by the digital camera 10. The guide image 62 is saved in memory.

A "guide image" is defined as an image that the user can view on the LCD screen 40, while also viewing a second image, usually the current view through the viewfinder. The guide consists primarily of an outline of a first image, i.e., an image already stored on the camera. The user can still see the majority of the second image, but can also view the outline of the first image. If the first and second images are being taken of approximately the same subject, the guide provides the user with a means for aligning the current image with the previous image. Aligning the two images allows the user to record the second image and maintain the same composition and perspective as the first image.

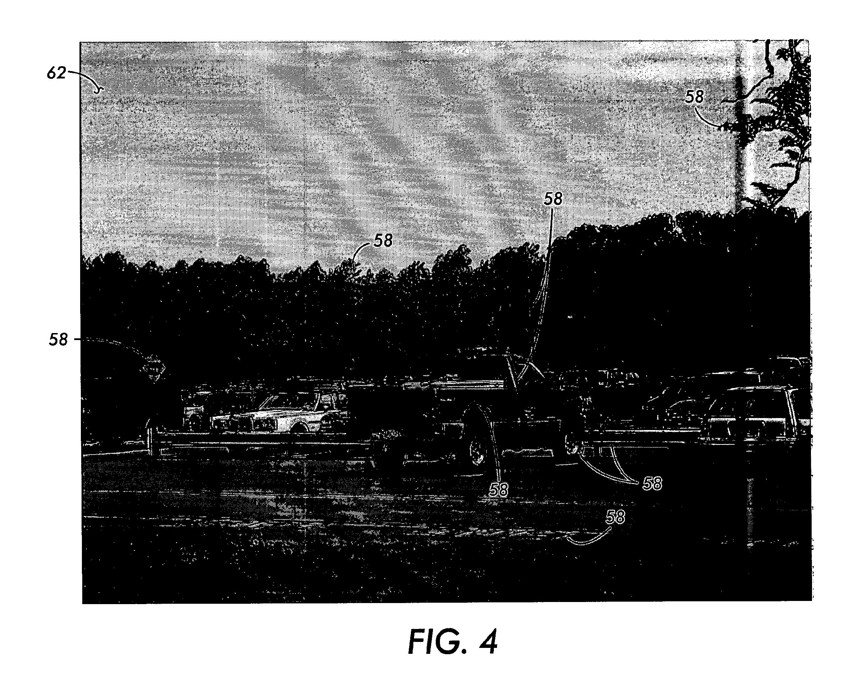

The guide image 62 is then communicated to LCD 40 for viewing. This allows the user to frame a current image being viewed through the viewfinder with an older image that has been converted to an outline. As shown in Figure 4, the guide image 62 guides a new view of the parking lot scene. Thus, the guide image 62 acts as a guide when taking a second picture of the parking lot after an elapsed period of time, that allows the user to capture the same composition and perspective as shown in Figure 2.

The user may not need both the same composition and the same perspective. It is obvious to anyone skilled in the art of photography that these are two separate concepts. However, the embodiments disclosed herein clearly allow the user to substantially maintain both of these qualities between images that are recorded at different times.

While edge detect filter 48 and guide image maker 50 are illustrated as two parts of the same device, a single element may accomplish both these functions or alternatively, the filter 48 and the image maker 50 may be entirely separate devices within the camera 10.

This idea may also be applied to digital video cameras, where a still "frame" or series of frames, may be stored, such that a user could begin recording a new sequence at the same perspective as an earlier recorded shot.

## Claims

1. An apparatus, comprising:
a light sensitive sensor that generates electrical charges in relation to amounts of light reflected from an external object, said sensor being adapted to record a first image;
an image editor device adapted to receive a processed form of the first image and which creates a guide image; and
a display operably connected to the image editing device with which to view a superposition of a second image and the guide image before recording the second image.

2. The apparatus according to claim 1, wherein the image editing device includes a filter adapted to produce an outline of the object in the first image.

3. A method of using a digital camera, comprising:
recording a first image of at least one first subject;
generating a guide image from the first image;
using the guide image to record a second image of at least one second subject,
wherein the guide image is superimposed over an initial image of the at least one second subject in preparation for recording the second image so that the second image will be recorded with at least one of substantially the same composition and substantially the same perspective as the first image.

4. The method of claim 3, wherein the second subject and the first subject are substantially the same.

5. The method of claim 3 or 4, wherein the second image is recorded at a later time than the first image.

6. The method according to any one of the preceding claims, wherein generating a guide image includes producing an outline of the at least part of the first image.

7. A method for using a camera, comprising:
providing a light sensitive sensor;
acquiring a first image from the sensor;
processing the first image;
sending the first image to an image editor;
creating a guide image from the first image with the image editor;
displaying the guide image on a display element of the camera during a user's preparation to acquire a second image from the light sensor.
